# EUROPÄISCHE PATENTSCHRIFT

(11) **EP 2 744 984 B1**
(45) Veröffentlichungstag und Bekanntmachung des Hinweises auf die Patenterteilung: **01.07.2015**
(21) Anmeldenummer: 12742915.7
(22) Anmeldetag: 02.08.2012
(51) Int. Cl.: F01D 25/16, F16C 19/18, F16F 15/023, F16C 27/04

(54) **WÄLZLAGERANORDNUNG EINES ABGASTURBOLADERS**
ROLLING BEARING ASSEMBLY OF AN EXHAUST GAS TURBOCHARGER
ENSEMBLE PALIER À ROULEMENT D'UN TURBOCOMPRESSEUR À GAZ D'ÉCHAPPEMENT

(30) Priorität: 18.08.2011 DE 102011081200
(43) Veröffentlichungstag der Anmeldung: 25.06.2014
(73) Patentinhaber: Bosch Mahle Turbo Systems GmbH & Co. KG, 70376 Stuttgart (DE)
(72) Erfinder: NGUYEN-SCHÄFER, Thanh-Hung, 71679 Asperg (DE)
(74) Vertreter: BRP Renaud & Partner mbB Rechtsanwälte Patentanwälte Steuerberater
(86) Internationale Anmeldenummer: PCT/EP2012/065122
(87) Internationale Veröffentlichungsnummer: WO 2013/023930

(56) Entgegenhaltungen:
- EP-A1- 2 141 373
- EP-A2- 0 272 151
- WO-A1-2009/133445
- WO-A2-2008/011400
- DE-A1-102009 048 511

## Beschreibung

Die vorliegende Erfindung betrifft eine Wälzlageranordnung für einen Rotor einer Turbine, vorzugsweise eines Abgasturboladers, mit den Merkmalen des Oberbegriffs des Anspruchs 1. Die vorliegende Erfindung betrifft außerdem einen Abgasturbolader für eine Brennkraftmaschine, insbesondere eines Kraftfahrzeugs oder einer Nutzmaschine, die mit einer Wälzlageranordnung der vorstehend beschriebenen Art ausgestattet ist.

Aus der DE 35 31 313 C3 ist eine Wälzlageranordnung für einen Rotor einer Turbine eines Abgasturboladers bekannt, die ein Lagergehäuse umfasst, in dem eine äußere Lagerschale schwimmend gelagert ist, um ein hydrodynamisches Gleitlager auszubilden. Koaxial innerhalb der äußeren Lagerschale ist eine innere Lagerschale vorgesehen, die drehfest mit einer Rotorwelle des Rotors verbunden ist. Axial beiderseits der inneren Lagerschale sind zwei Schrägkugellager an der Rotorwelle angeordnet, die außen an der äußeren Lagerschale abgestützt sind. Jedes Schrägkugellager besitzt einen Innenlaufring mit einer Innenlaufbahn für die Wälzkörper und einen Außenlaufring mit einer Außenlaufbahn für die Wälzkörper. Die beiden Innenlaufringe sind axial an der inneren Lagerschale abgestützt. Der Außenlaufring des einen Schrägkugellagers ist an einer Ringstufe der äußeren Lagerschale abgestützt. Der Außenlaufring des anderen Schrägkugellagers ist über eine Schraubendruckfeder an der äußeren Lagerschale abgestützt. Aus der EP 1 273 764 B1 ist eine weitere Wälzlageranordnung für einen Rotor eines Abgasturboladers bekannt, bei dem eine äußere Lagerschale über zwei axial voneinander beabstandete Radialkugellager an einer Rotorwelle des Rotors gelagert ist. Die äußere Lagerschale ist ihrerseits über Elastomerringe am Lagergehäuse schwingungsgedämpft abgestützt.

Aus der WO 2009/133445 A1 ist eine weitere, dem Oberbegriff entsprechende, Wäzlagerandordnung bekannt.

Die Verwendung von Wälzkörperlagern, insbesondere von Schrägkugellagern, reduziert bei kleineren Drehzahlen die auftretende Reibung zwischen Rotorwelle und Lagergehäuse. Während des Betriebs der Wälzlageranordnung, also bei rotierendem Rotor, kann es zu Schwingungen mit höheren Ordnungen bzw. Vibrationen kommen, die innerhalb der Wälzlageranordnung eine Geräuschentwicklung induzieren können. Eine derartige Geräuschentwicklung wird dabei häufig als nachteilig empfunden. Darüber hinaus können die für die Geräuschentwicklung verantwortlichen Schwingungen und Vibrationen auch zu einer höheren Bauteilbelastung innerhalb der Wälzlageranordnung führen.

Die vorliegende Erfindung beschäftigt sich mit dem Problem, für eine Wälzlageranordnung der eingangs genannten Art bzw. für einen damit ausgestatteten Abgasturbolader eine verbesserte Ausführungsform anzugeben, die sich insbesondere dadurch auszeichnet, dass die Tendenz zur Geräuschentwicklung reduziert ist.

Dieses Problem wird bei der vorliegenden Erfindung insbesondere durch die Gegenstände der unabhängigen Ansprüche gelöst. Vorteilhafte Ausführungsformen sind Gegenstand der abhängigen Ansprüche.

Die Erfindung beruht zunächst auf dem Gedanken, in das Lagergehäuse eine Lagerkartusche einzusetzen, die eine Außenschale und konzentrisch dazu eine Innenschale aufweist, die in zwei axial voneinander beabstandeten Lagerabschnitten jeweils über Wälzkörper um eine konzentrische Rotationsachse drehbar aneinander gelagert sind. Die Lagerkartusche repräsentiert dabei eine bauliche Einheit, welche die Innenschale, die Außenschale und die Lagerung zwischen Innenschale und Außenschale umfasst. Dabei ist es durchaus möglich, dass die Lagerkartusche erst bei der Montage an der Rotorwelle komplettiert wird.

Für den Einbau der Lagerkartusche in das Lagergehäuse wird die Innenschale erfindungsgemäß außen auf die Rotorwelle des Rotors aufgepresst, wobei die Innenschale im Bereich der Lagerabschnitte jeweils einen Innenpresssitzbereich aufweist. Ferner wird die Außenschale erfindungsgemäß innen in das Lagergehäuse eingepresst, wobei die Außenschale axial beabstandet zu den Lagerabschnitten zumindest einen Außenpresssitzbereich aufweist. Mit anderen Worten, der wenigstens eine Außenpresssitzbereich, der zwischen der Außenschale und dem Lagergehäuse ausgebildet ist, befindet axial zwischen den beiden Innenpresssitzbereichen, die zwischen der Innenschale und der Rotorwelle ausgebildet sind. Das bedeutet außerdem, dass zwischen der Außenschale und dem Lagergehäuse im Bereich der Lagerabschnitte kein Presssitz vorhanden ist, vielmehr kann sich dort Radialspiel befinden. Dieses Radialspiel wird bei der hier vorgestellten Wälzlageranordnung in Form eines Öldämpfungsringkanals realisiert, der im jeweiligen Lagerabschnitt radial zwischen dem Lagergehäuse und der Außenschale ausgebildet ist. Der jeweilige Öldämpfungsringkanal erstreckt sich dabei koaxial zur Rotationsachse und ist distal zur jeweiligen axialen Stirnseite der Kartusche, also axial innen durch den jeweiligen Außenpresssitzbereich begrenzt. Des Weiteren ist der jeweilige Öldämpfungsringkanal proximal zur jeweiligen axialen Stirnseite der Kartusche, also axial außen durch einen Verschlussring begrenzt, der am Lagergehäuse angeordnet ist. Der jeweilige Presssitz bewirkt eine drehfeste Verbindung zwischen Innenschale und der Rotorwelle bzw. zwischen der Außenschale und dem Lagergehäuse. Durch die axiale Beabstandung zwischen den Innenpresssitzbereichen und dem jeweiligen Außenpresssitzbereich lässt sich eine vergleichsweise hohe radiale Vorspannung im jeweiligen Lagerabschnitt realisieren, was das Schwingungsverhalten der Wälzlageranordnung signifikant beeinflusst. Über den jeweiligen Öldämpfungsringkanal kann eine Ölströmung erzeugt werden, die innerhalb des jeweiligen Öldämpfungsringkanals eine gewisse Schwingungsdämpfung der Außenschale gegenüber dem Lagergehäuse bewirkt. Diese schwingungsdämpfende Wirkung kann signifikant durch den hier stirnseitig der Kartusche vorgesehenen Verschlussring verbessert werden. Beispielsweise ermöglicht der Verschlussring im jeweiligen Öldämpfungsringkanal aufgrund seiner Drosselwirkung einen höheren Öldruck.

Gemäß einer besonders vorteilhaften Ausführungsform kann der jeweilige Verschlussring bezüglich der Außenschale berührungslos angeordnet sein. Mit anderen Worten, der jeweilige Verschlussring ist kontaktfrei zur Außenschale angeordnet. Auf diese Weise kann beispielsweise eine körperliche Schwingungsübertragung von der Außenschale auf das Lagergehäuse im Bereich der axialen Stirnseite der Kartusche vermieden werden. Hierdurch lässt sich die Schwingungsdämpfung durch den jeweiligen Öldämpfungsringspalt besonders effektiv realisieren.

Zweckmäßig kann zwischen dem jeweiligen Verschlussring und der Außenschale ein Axialspiel ausgebildet sein, wodurch in der Axialrichtung jeglicher Kontakt zwischen Verschlussring und Außenschale vermieden werden kann.

Zweckmäßig kann zwischen dem jeweiligen Verschlussring und der Außenschale ein Radialspiel ausgebildet sein, wodurch in der Radialrichtung jeglicher körperlicher Kontakt zwischen dem jeweiligen Verschlussring und der Außenschale vermieden werden kann.

Insbesondere kann es sich beim jeweiligen Verschlussring um eine Abdichtscheibe oder um einen Wellendichtring oder um einen Sprengring handeln. Je nach vorhandenem Einbauraum und je nach der zu erzielenden Verschlusswirkung kann zwischen den vorstehend genannten Ausführungsformen des Verschlussrings gewählt werden. Grundsätzlich kann auch eine andere Ausführungsform zur Realisierung eines derartigen Verschlussrings herangezogen werden. Gemäß einer anderen vorteilhaften Ausführungsform kann der jeweilige Verschlussring radial in eine ringförmige Aufnahme, insbesondere in eine Ringstufe oder in eine Ringnut, eintauchen, die an der Außenschale im Bereich der jeweiligen axialen Stirnseite ausgebildet ist. Hierdurch wird zwischen dem jeweiligen Verschlussring und der Außenschale eine Art Labyrinthdichtung realisiert, was die Dichtungswirkung des Verschlussrings für den jeweiligen Öldämpfungsringkanal verbessert. Dementsprechend lassen sich im jeweiligen Öldämpfungsringkanal beispielsweise höhere Öldrücke realisieren.

Bei einer anderen vorteilhaften Ausführungsform kann der jeweilige Verschlussring am Lagergehäuse in eine ringförmig umlaufende Aufnahme eingesetzt sein, die beispielsweise als Ringnut oder als Ringstufe konfiguriert sein kann. Insbesondere kann besagte Aufnahme zur zugehörigen axialen Stirnseite des Lagergehäuses axial nach innen versetzt angeordnet sein. Durch die hier vorgeschlagene Bauweise kann beispielsweise ein Verschlussring verwendet werden, der in der Radialrichtung vergleichsweise groß baut und sich beispielsweise durch eine besonders hohe Stabilität auszeichnet.

Bei einer alternativen Ausführungsform kann der jeweilige Verschlussring an der jeweiligen axialen Stirnseite des Lagergehäuses angeordnet sein. Diese Ausführungsform ist insbesondere dann von Vorteil, wenn im Bereich der axialen Stirnseite des Lagergehäuses ausreichend Bauraum zur Unterbringung des jeweiligen Verschlussrings zur Verfügung steht. Demgegenüber ist die zuvor genannte Ausführungsform, die mit einer am Lagergehäuse ausgebildeten, umlaufenden Aufnahme arbeitet, vergleichsweise aufwändig zu realisieren, baut dafür entsprechend kompakt.

Entsprechend einer anderen vorteilhaften Ausführungsform kann das Lagergehäuse für jeden Öldämpfungsringkanal eine Ölzuführöffnung aufweisen, die in den Öldämpfungsringkanal einmündet. Ferner ist für jeden Öldämpfungsringkanal zumindest eine Öleinspritzdüse vorgesehen, welche die Außenschale durchsetzt und im Wesentlichen der jeweiligen Ölzuführöffnung vorzugsweise diametral gegenüberliegend oder wenigstens um etwa 90° in der Umfangsrichtung dazu versetzt angeordnet ist. Zweckmäßig sind dabei alle Öleinspritzdüsen der jeweiligen Ölzuführöffnung diametral gegenüberliegend angeordnet. Durch die hier vorgeschlagene Bauweise wird erreicht, dass eine über die jeweilige Ölzuführöffnung in den Öldämpfungsringkanal eintretende Ölströmung sich zunächst im jeweiligen Öldämpfungsringkanal um wenigstens 180° in der Umfangsrichtung ausbreiten muss, bevor sie zur jeweiligen Öleinspritzdüse gelangt. Ein Teil der Ölströmung kann nun durch die jeweilige Öleinspritzdüse in einen radialen Zwischenraum zwischen Innenschale und Außenschale eintreten, in dem sich die Wälzkörper der beiden Lagerabschnitte befinden. Somit kann über die jeweilige Öleinspritzdüse eine ausreichende Schmierung und/oder Kühlung der Wälzkörper sichergestellt werden.

Zweckmäßig kann hierzu die jeweilige Öleinspritzdüse auf den jeweiligen Lagerabschnitt ausgerichtet sein, so dass die jeweilige Öleinspritzdüse das Öl in Richtung der Wälzkörper des jeweiligen Lagerabschnitts in den zuvor genannten Zwischenraum einspritzt.

Zweckmäßig kann die Wälzlageranordnung außerdem mit einem Ölablauf versehen sein, der zweckmäßig an einer den Ölzuführöffnungen diametral gegenüberliegenden Seite die Außenschale und das Lagergehäuse durchsetzt. Der Ölablauf kann vergleichsweise groß dimensioniert werden, so dass stromab der Öleinspritzdüsen, also insbesondere im Zwischenraum, ein gegenüber den Öldämpfungsringkanälen deutlich reduzierter Öldruck herrscht. Somit kann das Öl aus dem Zwischenraum rasch abfließen, was für die Kühlung und Schmierung der Wälzkörper von Vorteil ist.

Bei einer zweckmäßigen Ausführungsform können zwei axial voneinander beabstandete Außenpresssitzbereiche vorgesehen sein, die jeweils axial zwischen den beiden Innenpresssitzbereichen bzw. axial zwischen den Lagerabschnitten angeordnet sind. Zweckmäßig kann nun der vorstehend erwähnte Ölablauf axial zwischen den beiden Außenpresssitzbereichen verlaufen bzw. angeordnet sein. Des Weiteren ist es möglich, axial zwischen den beiden Außenpresssitzbereichen einen in der Umfangsrichtung umlaufenden mittleren Ringkanal auszubilden, der insbesondere mit dem Ölablauf kommuniziert. Die Verwendung von zwei axial beabstandeten Außenpresssitzbereichen erleichtert die Montage bei hinreichender Abstützung der Außenschale am Lagergehäuse.

Entsprechend einer anderen vorteilhaften Ausführungsform kann die Innenschale axial zweigeteilt sein und dementsprechend zwei Innenschalenteile aufweisen, die jeweils im Bereich des jeweiligen Lagerabschnitts einen der bereits genannten Innenpresssitzbereiche aufweisen. Die Verwendung einer zweigeteilten Innenschale erleichtert die Montage der Lagerkartusche unmittelbar an der Rotorwelle.

Gemäß einer besonders vorteilhaften Ausführungsform kann im jeweiligen Lagerabschnitt eine Außenlaufbahn der Wälzkörper integral an der Außenschale ausgebildet sein. Zusätzlich oder alternativ kann im jeweiligen Lagerabschnitt eine Innenlaufbahn der Wälzkörper integral an der Innenschale ausgebildet sein. Innenschale und Außenschale bilden dann integrale Bestandteile des jeweiligen Wälzkörperlagers, so dass beispielsweise auf separate Laufringe verzichtet werden kann. Gemäß einer besonders vorteilhaften Ausführungsform können die beiden Lagerabschnitte als Schrägkugellager konzipiert sein, bei denen die Laufbahnen nicht radial zueinander ausgerichtet sind, sondern eine Neigung zueinander aufweisen, die zwischen der Radialrichtung und der Axialrichtung liegt. Zweckmäßig kann dabei die Innenlaufbahn die Wälzkörper, also die Kugeln axial außen abstützen, während die Außenlaufbahn die Wälzkörper axial innen abstützt.

Ein erfindungsgemäßer Abgasturbolader umfasst einen Rotor, dessen Rotorwelle ein Turbinenrad einer Turbine des Abgasturboladers mit einem Verdichterrad eines Verdichters des Abgasturboladers drehfest verbindet. Ferner umfasst der erfindungsgemäße Abgasturbolader eine Wälzlageranordnung der vorstehend beschriebenen Art. Das Lagergehäuse der Wälzlageranordnung kann dabei einen Bestandteil eines Gehäuses des Abgasturboladers bilden. Üblicherweise umfasst ein Abgasturbolader ein Turbinengehäuse, in dem das Turbinenrad rotiert, ein Verdichtergehäuse, in dem das Verdichterrad rotiert, und ein Lagergehäuse, in dem die Lagerung der Rotorwelle erfolgt. Das Lagergehäuse des Abgasturboladers kann dabei dem Lagergehäuse der Wälzlageranordnung entsprechen. Grundsätzlich sind jedoch auch Ausführungsformen denkbar, bei denen das Lagergehäuse integral am Verdichtergehäuse oder integral am Turbinengehäuse ausgeformt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

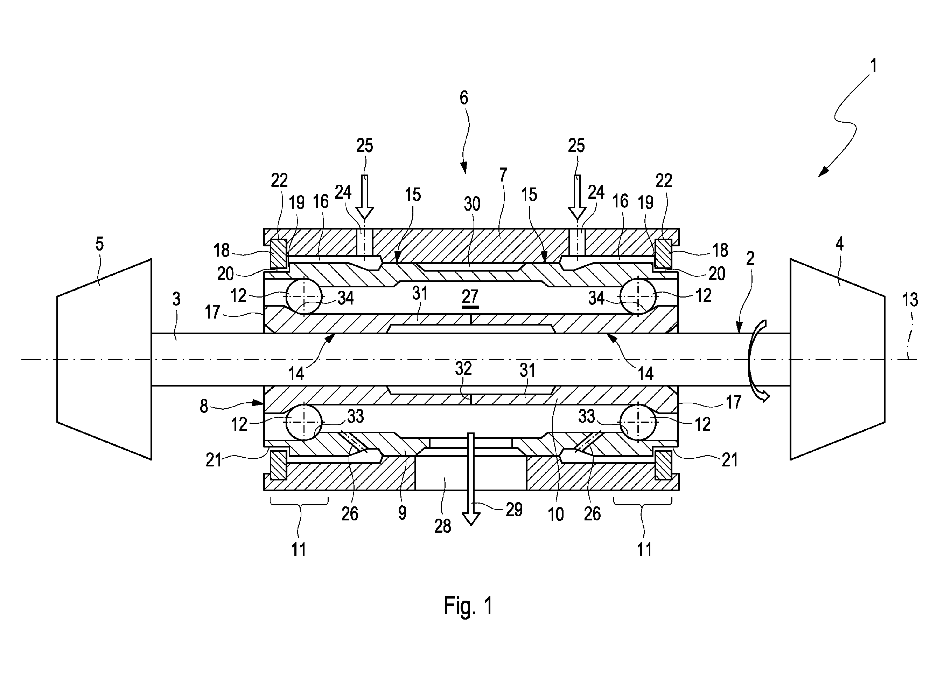

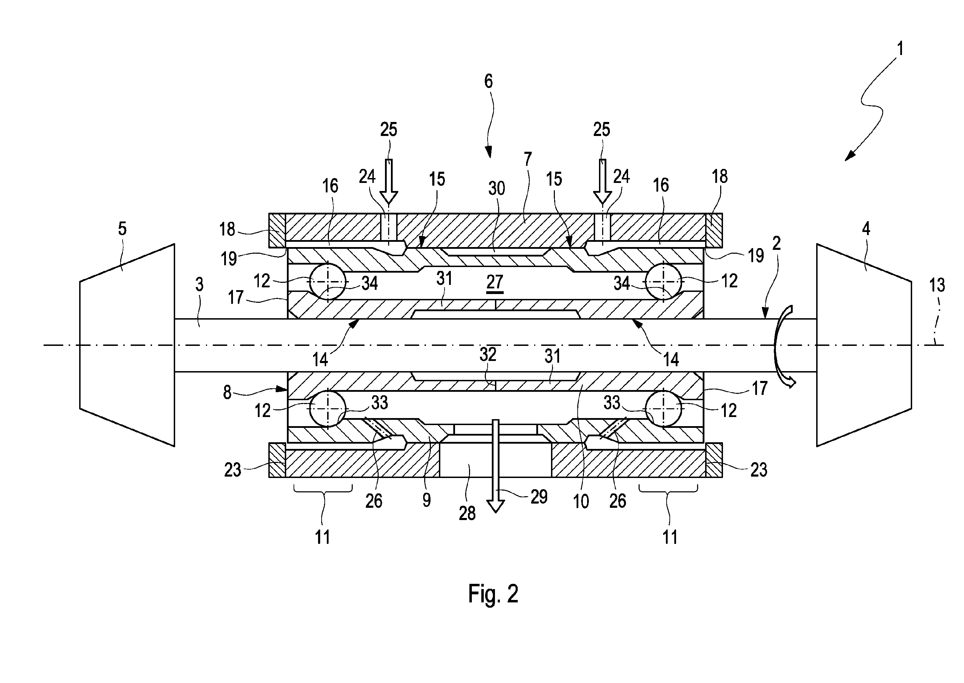

- Fig. 1 und 2: jeweils einen stark vereinfachten Längsschnitt eines Abgasturboladers im Bereich einer Wälzlageranordnung, bei verschiedenen Ausführungsformen.

Entsprechend den Figuren 1 und 2 umfasst ein nur teilweise dargestellter Abgasturbolader 1, der zur Verwendung bei einer Brennkraftmaschine, insbesondere in einem Kraftfahrzeug, vorzugsweise in einem Nutzfahrzeug, oder in einer Nutzmaschine, vorgesehen ist, einen Rotor 2 mit einer Rotorwelle 3, die ein Turbinenrad 4 des Rotors 2 mit einem Verdichterrad 5 des Rotors 2 drehfest verbindet. Das Turbinenrad 4 bildet dabei außerdem einen Bestandteil einer hier nicht gezeigten Turbine des Abgasturboladers 1. Ebenso bildet das Verdichterrad 5 gleichzeitig einen Bestandteil eines hier nicht gezeigten Verdichters des Abgasturboladers 1. Der Abgasturbolader 1 umfasst ferner eine Wälzlageranordnung 6 zur Lagerung des Rotors 2. Die Wälzlageranordnung 6 umfasst hierzu ein Lagergehäuse 7, das ringförmig ausgestaltet ist. Ferner umfasst die Wälzlageranordnung 6 eine Lagerkartusche 8, die in das Lagergehäuse 7 eingesetzt ist. Die Lagerkartusche 8 weist eine hülsenförmige Außenschale 9 und konzentrisch dazu eine hülsenförmige Innenschale 10 auf. Die Innenschale 10 und Außenschale 9 sind in zwei axial voneinander beabstandeten Lagerabschnitten 11 jeweils über Wälzkörper 12 um eine konzentrische Rotationsachse 13 drehbar aneinander gelagert. Die Innenschale 10 ist dabei außen auf die Rotorwelle 3 aufgepresst. Hierbei werden zwei Innenpresssitzbereiche 14 ausgebildet, die sich jeweils im Bereich eines der Lagerabschnitte 11 befinden. Im jeweiligen Innenpresssitzbereich 14 ist die Innenschale 10 drehfest mit der Rotorwelle 3 verbunden, nämlich durch Reibschluss.

Die Außenschale 9 ist innen in das Lagergehäuse 7 eingepresst. Dabei ist axial zu den Lagerabschnitten 11 beabstandet zumindest ein Außenpresssitzbereich 15 ausgebildet. Bei den hier gezeigten Beispielen sind jeweils zwei derartige Außenpresssitzbereiche 15 vorgesehen, die axial voneinander beabstandet sind. Im jeweiligen Außenpresssitzbereich 15 ist die Außenschale 9 drehfest mit dem Lagergehäuse 7 verbunden, und zwar über einen Reibschluss. Die Außenpresssitzbereiche 15 sind axial zwischen den Lagerabschnitten 11 bzw. axial zwischen den beiden Innenpresssitzbereichen 14 angeordnet.

Im jeweiligen Lagerabschnitt 11 besitzt die Wälzlageranordnung 6 außerdem je einen Öldämpfungsringkanal 16, der hierzu radial zwischen dem Lagergehäuse 7 und der Außenschale 9 ausgebildet ist. Die beiden Öldämpfungskanäle 16 erstrecken sich dabei koaxial zur Rotationsachse 13. Die beiden Öldämpfungsringkanäle 16 sind distal zur jeweiligen axialen Stirnseite 17 der Lagerkartusche 8 durch den jeweiligen Außenpresssitzbereich 15 und proximal zur jeweiligen axialen Stirnseite 17 der Lagerkartusche 8 durch einen Verschlussring 18 begrenzt. Der jeweilige Verschlussring 18, z.B. in Form eines Sprengrings, ist dabei axial fest am Lagergehäuse 7 angeordnet, z. B. damit verschraubt oder darin eingesprengt.

Bei der in Figur 1 gezeigten Ausführungsform ist zwischen dem jeweiligen Verschlussring 18 und der Außenschale 9 ein Axialspiel 19 ausgebildet, so dass der jeweilige Verschlussring 19 in der Axialrichtung keinen Kontakt zur Außenschale 9 besitzt. Außerdem ist hier zwischen dem jeweiligen Verschlussring 18 und der Außenschale 9 ein Radialspiel 20 ausgebildet, so dass der jeweilige Verschlussring 18 auch radial keinen Kontakt zur Außenschale 9 besitzt. Ferner ist bei der in Figur 1 gezeigten Ausführungsform an der Außenschale 9 für jeden Verschlussring 18 eine ringförmig umlaufende Aufnahme 21 ausgebildet, und zwar im Bereich der jeweiligen axialen Stirnseite 17. Die Aufnahme 21 ist im Beispiel als Ringstufe ausgestaltet und ist dementsprechend an der jeweiligen Stirnseite 17 axial offen. Alternativ kann die Aufnahme 21 auch als Ringnut ausgestaltet sein.

Im Beispiel der Figur 1 ist außerdem für jeden Verschlussring 18 am Lagergehäuse 7 eine umlaufende Aufnahme 22 ausgeformt, in welche der jeweilige Verschlussring 18 radial eingesetzt ist. Die jeweilige Aufnahme 22 ist hier als Ringnut konzipiert, sie kann jedoch ebenso als Ringstufe ausgestaltet sein. Bemerkenswert ist, dass bei der in Figur 1 gezeigten Ausführungsform der jeweilige Verschlussring 18 bezüglich der axialen Stirnseite 17 der Kartusche 8 bzw. des Lagergehäuses 7 axial nach innen versetzt angeordnet ist. Hierdurch baut die hier gezeigte Wälzlageranordnung 6 axial vergleichsweise kompakt.

Als Verschlussring 18 kommt bei der in Figur 1 gezeigten Ausführungsform beispielsweise ein Wellendichtring oder ein Sprengring zum Einsatz.

Bei der in Figur 2 gezeigten Ausführungsform ist der jeweilige Verschlussring 18 jeweils an eine axiale Stirnseite 23 des Lagergehäuses 7 angebaut, so dass der jeweilige Verschlussring 18 axial über die Kartusche 8 übersteht. Auch hier ist axial zwischen dem jeweiligen Verschlussring 18 und der Außenschale 9 ein Axialspiel 19 ausgebildet. Ferner überlappt der jeweilige Verschlussring 18 die Außenschale 9 in der Radialrichtung.

Bei der in Figur 2 gezeigten Ausführungsform wird als Verschlussring 18 vorzugsweise eine Abdichtscheibe verwendet.

Bei beiden Ausführungsformen ist durch das jeweilige Spiel 19, 20 gewährleistet, dass die Verschlussringe 18 bezüglich der Außenschale 9 berührungslos bzw. kontaktfrei angeordnet sind.

Bei den Ausführungsformen der Figuren 1 und 2 weist das Lagergehäuse 7 für jeden Öldämpfungsringkanal 16 eine Ölzuführöffnung 24 auf, die in den Öldämpfungsringkanal 16 einmündet und über die entsprechend einem Pfeil 25 Öl in den jeweiligen Öldämpfungsringkanal 16 eingeleitet werden kann. Für jeden Öldämpfungsringkanal 16 ist außerdem zumindest eine Öleinspritzdüse 26 vorgesehen, wobei die jeweilige Öleinspritzdüse 26 die Außenschale 9 radial durchsetzt und dabei im Wesentlichen vorzugsweise diametral gegenüber oder um wenigstens 90° in der Umfangsrichtung versetzt zu der jeweiligen Ölzuführöffnung 24 angeordnet ist. Zweckmäßig sind alle Öleinspritzdüsen 26 im Wesentlichen diametral gegenüber der jeweiligen Ölzuführöffnung 24 angeordnet. Hierdurch wird erzwungen, dass das Öl von der Ölzuführöffnung 24 im Öldämpfungsringkanal 16 zunächst in der Umfangsrichtung über wenigstens 180° strömen muss, bevor es über die Öleinspritzdüse 26 in einen ringförmigen Zwischenraum 27 überströmen kann, der radial zwischen der Innenschale 10 und der Außenschale 9 ausgebildet ist und in dem die Wälzkörper 12 der beiden Lagerabschnitte 11 angeordnet sind. Die Öleinspritzdüsen 26 sind hier in Form von Bohrungen realisiert, die gegenüber der Radialrichtung geneigt verlaufen, insbesondere mit einem Winkel von etwa 45°. Die Öleinspritzdüsen 26 sind auf den jeweiligen Lagerabschnitt 11 ausgerichtet, so dass das Öl über die jeweilige Öleinspritzdüse 26 in Richtung der Wälzkörper 12 in den Zwischenraum 27 eingespritzt wird.

Die Wälzlageranordnung 6 ist außerdem mit einem Ölablauf 28 ausgestattet, durch den das Öl entsprechend einem Pfeil 29 abfließen kann. Der Ölablauf 28 durchsetzt dabei die Innenschale 9 und fluchtend dazu außerdem das Lagergehäuse 7. Im Beispiel ist der Ölablauf 28 axial zwischen den beiden Außenpresssitzbereichen 15 positioniert. Ferner ist axial zwischen den beiden Öldämpfungsringkanälen 16 ein mittlerer Ringkanal 30 axial zwischen den Außenpresssitzbereichen 15 angeordnet, der mit dem Ölablauf 28 fluidisch in Verbindung steht.

Die Innenschale 8 ist zweckmäßig axial zweigeteilt. Dementsprechend weist die Innenschale 8 hier zwei Innenschalenteilen 31 auf, die in einem Stoß 32 axial stirnseitig aufeinanderstoßen.

Bei den hier gezeigten Ausführungsformen sind die Innenschale 10 und die Außenschale 9 über die Wälzkörper 12 unmittelbar aneinander gelagert, wobei die Wälzkörper 12 hier als Kugeln ausgestaltet sind und die Lagerabschnitte 11 entsprechend Kugellager bilden. Im Beispiel sind die beiden Lagerabschnitte 11 als Schrägkugellager konzipiert, wobei eine Außenlaufbahn 33 des jeweiligen Schrägkugellagers integral an der Außenschale 9 ausgeformt ist, während eine Innenlaufbahn 34 des jeweiligen Schrägkugellagers integral an der Innenschale 10 ausgeformt ist. Dabei stützen die Außenlaufbahnen 33 die Wälzkörper 12 axial nach innen ab, während die Innenlaufbahnen 34 die Wälzkörper 12 axial nach außen abstützen.

Die Lagerkartusche 8 und insbesondere die gesamte Wälzlageranordnung 6 ist in den hier gezeigten Beispielen axial spiegelsymmetrisch ausgestaltet.

## Patentansprüche

1. Wälzlageranordnung für einen Rotor (2) einer Turbine, vorzugsweise eines Abgasturboladers (1), mit einem Lagergehäuse (7),
- wobei eine Lagerkartusche (8) vorgesehen ist, die eine Außenschale (9) und konzentrisch dazu eine Innenschale (10) aufweist, die in zwei axial voneinander beabstandeten Lagerabschnitten (11) jeweils über Wälzkörper (12) um eine konzentrische Rotationsachse (13) drehbar aneinander gelagert sind,
- wobei die Innenschale (10) außen auf eine Rotorwelle (3) des Rotors (2) aufgepresst ist und im Bereich der Lagerabschnitte (11) jeweils einen Innenpresssitzbereich (14) aufweist,
**dadurch gekennzeichnet,**
- **dass** die Außenschale (9) innen in das Lagergehäuse (7) eingepresst ist und axial beabstandet zu den Lagerabschnitten (11) zumindest einen Außenpresssitzbereich (15) aufweist,
- **dass** im jeweiligen Lagerabschnitt (11) ein Öldämpfungsringkanal (16) radial zwischen dem Lagergehäuse (7) und der Außenschale (9) ausgebildet ist, der sich koaxial zur Rotationsachse (13) erstreckt und distal zur jeweiligen axialen Stirnseite (17) der Lagerkartusche (8) durch den jeweiligen Außenpresssitzbereich (15) begrenzt ist,
- **dass** der jeweilige Öldämpfungsringkanal (16) proximal zur jeweiligen axialen Stirnseite (17) der Lagerkartusche (8) durch einen Verschlussring (18) begrenzt ist, der am Lagergehäuse (7) angeordnet ist.

2. Wälzlageranordnung nach Anspruch 1,
**dadurch gekennzeichnet,**
**dass** zwischen dem jeweiligen Verschlussring (18) und der Außenschale (9) ein Axialspiel (19) ausgebildet ist.

3. Wälzlageranordnung nach Anspruch 1 oder 2,
**dadurch gekennzeichnet,**
**dass** der jeweilige Verschlussring (18) am Lagergehäuse (7) in eine ringförmige Aufnahme (22) eingesetzt ist.

4. Wälzlageranordnung nach Anspruch 1 oder 2,
**dadurch gekennzeichnet,**
**dass** der jeweilige Verschlussring (18) an der jeweiligen axialen Stirnseite (23) des Lagergehäuses (7) angeordnet ist.

5. Wälzlageranordnung nach einem der Ansprüche 1 bis 3,
**dadurch gekennzeichnet,**
**dass** zwischen dem jeweiligen Verschlussring (18) und der Außenschale (9) ein Radialspiel (20) ausgebildet ist.

6. Wälzlageranordnung nach einem der Ansprüche 1 bis 5,
**dadurch gekennzeichnet,**
**dass** der jeweilige Verschlussring (18) eine Abdichtscheibe oder ein Wellendichtring oder ein Sprengring ist.

7. Wälzlageranordnung nach einem der Ansprüche 1 bis 6,
**dadurch gekennzeichnet,**
**dass** der jeweilige Verschlussring (18) radial in eine ringförmige Aufnahme (21) eintaucht, die an der Außenschale (9) im Bereich der jeweiligen axialen Stirnseite (17) ausgebildet ist.

8. Wälzlageranordnung nach einem der Ansprüche 1 bis 7,
**dadurch gekennzeichnet,**
- **dass** das Lagergehäuse (7) für jeden Öldämpfungsringkanal (16) eine Ölzuführöffnung (24) aufweist, die in den Öldämpfungsringkanal (16) einmündet,
- **dass** für jeden Öldämpfungsringkanal (16) zumindest eine Öleinspritzdüse (26) vorgesehen ist, die die Außenschale (9) durchsetzt und der jeweiligen Ölzuführöffnung (24) diametral gegenüberliegend angeordnet ist.

9. Wälzlageranordnung nach einem der Ansprüche 1 bis 8,
**dadurch gekennzeichnet,**
**dass** zwei axial voneinander beabstandete Außenpresssitzbereiche (15) vorgesehen sind.

10. Wälzlageranordnung nach einem der Ansprüche 1 bis 8,
**dadurch gekennzeichnet,**
**dass** die Innenschale (10) axial zweigeteilt ist und zwei Innenschalenteile (31) aufweist, die jeweils im Bereich des jeweiligen Lagerabschnitts (11) einen Innenpresssitzbereich (14) aufweisen.

11. Wälzlageranordnung nach einem der Ansprüche 1 bis 10,
**dadurch gekennzeichnet,**
**dass** im jeweiligen Lagerabschnitt (11) eine Außenlaufbahn (33) der Wälzkörper (12) integral an der Außenschale (9) ausgebildet ist und/oder eine Innenlaufbahn (34) der Wälzkörper (12) integral an der Innenschale (10) ausgebildet ist.

12. Abgasturbolader für eine Brennkraftmaschine, insbesondere eines Kraftfahrzeugs oder eine Nutzmaschine,
- mit einem Rotor (2), dessen Rotorwelle (3) ein Turbinenrad (4) mit einem Verdichterrad (5) drehfest verbindet,
- mit einer Wälzlageranordnung (6) nach einem der Ansprüche 1 bis 11.

## Claims

1. Rolling bearing assembly for a rotor (2) of a turbine, preferably of an exhaust gas turbocharger (1), comprising a bearing housing (7),
- a bearing cartridge (8) being provided which comprises an outer shell (9) and an inner shell (10) which is concentric therewith, which shells are each mounted, in two bearing portions (11) which are at an axial distance from one another, via rolling elements (12) so as to be able to rotate relative to one another about a concentric axis of rotation (13),
- the inner shell (10) being pressed onto the outside of a rotor shaft (3) of the rotor (2) and comprising an inner pressing seat region (14) in the region of each of the bearing portions (11),
**characterised in that**
- the outer shell (9) is pressed into the bearing housing (7) on the inside and comprises at least one outer pressing seat region (15) at an axial distance from the bearing portions (11),
- in each bearing portion (11), an oil damping ring channel (16) is formed radially between the bearing housing (7) and the outer shell (9) and extends coaxially with the axis of rotation (13) and is delimited distally to each axial end face (17) of the bearing cartridge (8) by the respective outer pressing seat region (15),
- each oil damping ring channel (16) is delimited proximally to each axial end face (17) of the bearing cartridge (8) by a locking ring (18) which is arranged on the bearing housing (7).

2. Rolling bearing assembly according to claim 1, **characterised in that** axial play (19) is formed between each locking ring (18) and the outer shell (9).

3. Rolling bearing assembly according to either claim 1 or claim 2, **characterised in that** each locking ring (18) on the bearing housing (7) is inserted in an annular recess (22).

4. Rolling bearing assembly according to either claim 1 or claim 2, **characterised in that** each locking ring (18) is arranged on the respective axial end face (23) of the bearing housing (7).

5. Rolling bearing assembly according to any of claims 1 to 3, **characterised in that** radial play (20) is formed between each locking ring (18) and the outer shell (9).

6. Rolling bearing assembly according to any of claims 1 to 5, **characterised in that** each locking ring (18) is a joint washer or a shaft seal ring or a snap ring.

7. Rolling bearing assembly according to any of claims 1 to 6, **characterised in that** each locking ring (18) dips radially into an annular recess (21) which is formed in the outer shell (9) in the region of each axial end face (17).

8. Rolling bearing assembly according to any of claims 1 to 7, **characterised in that**
- the bearing housing (7) comprises an oil supply opening (24) for each oil damping ring channel (16), which opening discharges into the oil damping ring channel (16),
- for each oil damping ring channel (16), at least one oil injection nozzle (26) is provided which penetrates the outer shell (9) and is arranged diametrically opposite the respective oil supply opening (24).

9. Rolling bearing assembly according to any of claims 1 to 8, **characterised in that** two outer pressing seat regions (15) which are at an axial distance from one another are provided.

10. Rolling bearing assembly according to any of claims 1 to 8, **characterised in that** the inner shell (10) is divided axially into two and comprises two inner shell parts (31) which each comprise an inner pressing seat region (14) in the region of each bearing portion (11).

11. Rolling bearing assembly according to any of claims 1 to 10, **characterised in that** in each bearing portion (11), an outer raceway (33) of the rolling element (12) is formed integrally on the outer shell (9) and/or an inner raceway (34) of the rolling element (12) is formed integrally on the inner shell (10).

12. Exhaust gas turbocharger for an internal combustion engine, in particular of a motor vehicle or a machine,
- comprising a rotor (2), the rotor shaft (3) of which connects a turbine wheel (4) to a compressor impeller (5) for conjoint rotation,
- comprising a rolling bearing assembly (6) according to any of claims 1 to 11.

## Revendications

1. Ensemble de palier à roulement pour un rotor (2) d'une turbine, de préférence d'un turbocompresseur à gaz d'échappement (1), comprenant un logement de palier (7),
- dans lequel il est prévu une cartouche de palier (8), qui présente une coque externe (9) et, concentrique à celle-ci, une coque interne (10), qui sont montées dans deux sections de palier (11) axialement distantes l'une de l'autre à rotation mutuelle respectivement via des corps de roulement (12) autour d'un axe de rotation concentrique (13),
- dans lequel la coque interne (10) est comprimée extérieurement sur un arbre (3) du rotor (2) et présente dans la zone des sections de palier (11) respectivement une zone interne d'ajustement serré (14),
**caractérisé en ce que** :
- la coque externe (9) est refoulée intérieurement dans le logement de palier (7) et présente à distance axiale des sections de palier (11) au moins une zone externe d'ajustement serré (15),
- il est formé radialement dans la section de palier respective (11) entre le logement de palier (7) et la coque externe (9) un canal annulaire d'amortissement à l'huile (16) qui s'étend coaxialement à l'axe de rotation (13) et est limité de manière distale à la face avant axiale respective (17) de la cartouche de palier (8) par la zone externe d'ajustement serré respective (15),
- le canal annulaire d'amortissement à l'huile respectif (16) est limité de manière proximale à la face avant axiale respective (17) de la cartouche de palier (8) par un anneau de fermeture (18) qui est aménagé sur le logement de palier (17).

2. Ensemble de palier de roulement selon la revendication 1,
**caractérisé en ce que** :
un jeu axial (19) est ménagé entre l'anneau de fermeture (18) et la coque externe (9).

3. Ensemble de palier de roulement selon la revendication 1 ou la revendication 2, **caractérisé en ce que** :
l'anneau de fermeture respectif (18) est inséré sur le logement de palier (7) dans un logement annulaire (22).

4. Ensemble de palier de roulement selon la revendication 1 ou la revendication 2, **caractérisé en ce que** :
l'anneau de fermeture respectif (18) est aménagé sur la face avant axiale respective (23) du logement de palier (7).

5. Ensemble de palier de roulement selon l'une quelconque des revendications 1 à 3,
**caractérisé en ce que** :
un jeu radial (20) est ménagé entre l'anneau de fermeture respectif (18) et la coque externe (9).

6. Ensemble de palier de roulement selon l'une quelconque des revendications 1 à 5,
**caractérisé en ce que** :
l'anneau de fermeture respectif (18) est un disque d'étanchéité, une bague à lèvres étanches ou une bague d'arrêt à ressort.

7. Ensemble de palier de roulement selon l'une quelconque des revendications 1 à 6,
**caractérisé en ce que** :
l'anneau de fermeture respectif (18) s'enfonce radialement dans un logement annulaire (21), qui est formé dans la coque externe (9) dans la zone de la face avant axiale respective (17).

8. Ensemble de palier de roulement selon l'une quelconque des revendications 1 à 7,
**caractérisé en ce que** :
- le logement de palier (7) présente pour chaque canal annulaire d'amortissement à l'huile (16) une ouverture d'acheminement d'huile (14) qui débouche dans le canal annulaire d'amortissement à l'huile (16),
- il est prévu pour chaque canal annulaire d'amortissement à l'huile (16) au moins une buse de pulvérisation d'huile (26) qui traverse la coque externe (9) et est diamétralement opposée à l'ouverture d'acheminement d'huile respective (24).

9. Ensemble de palier de roulement selon l'une quelconque des revendications 1 à 8,
**caractérisé en ce que** :
il est prévu deux zones externes d'ajustement serré (15) axialement espacées l'une de l'autre.

10. Ensemble de palier de roulement selon l'une quelconque des revendications 1 à 8,
**caractérisé en ce que** :
la coque interne (10) est axialement divisée en deux et présente deux sections de coque interne (31), qui présentent respectivement dans la zone de la section de palier respective (11) une zone interne d'ajustement serré (14).

11. Ensemble de palier de roulement selon l'une quelconque des revendications 1 à 10,
**caractérisé en ce que** :
il est formé dans la section de palier respective (11) une bande de roulement externe (33) des corps de roulement qui fait partie intégrante de la coque externe (9) et/ou une bande de roulement interne (34) des corps de roulement (12) qui fait partie intégrante de la coque interne (10).

12. Turbocompresseur à gaz d'échappement pour un moteur à combustion interne, en particulier d'un véhicule à combustion interne ou d'une machine utilitaire, comprenant :
- un rotor (2) dont l'arbre (3) relie une roue de turbine (4) à une roue de compresseur (5) de manière solidaire en rotation,
- un ensemble de palier de roulement (6) selon l'une quelconque des revendications 1 à 11.
